# DEMANDE DE BREVET EUROPEEN

(11) **EP 0 522 955 A1**
(43) Date de publication de la demande: **13.01.1993**
(21) Numéro de dépôt: 92401945.8
(22) Date de dépôt: 07.07.1992
(51) Int. Cl.: H01B 5/02, B60M 1/13, B60M 1/30

(54) **Dispositif d'alimentation en électricité par contact avec un frotteur et procédé de réalisation d'un tel dispositif**

(30) Priorité: 09.07.1991 FR 9108581
(71) Demandeur: Delachaux S.A., F-92231 GennevilliersCédex (FR)
(72) Inventeur: Bommart, Patrick, F-92500 Rueil-Malmaison (FR)
(74) Mandataire: Martin, Jean-Jacques

(57) **Abrégé**

la présente invention concerne un dispositif d'alimentation en électricité par contact avec un frotteur, ainsi qu'un procédé de réalisation d'un tel dispositif.

le dispositif (1) comporte un corps de montage (2) électriquement conducteur revêtu, en vue du contact avec le frotteur (6), d'une pellicule d'usure (3) électriquement conductrice, comprenant un matériau électriquement conducteur présentant une dureté au moins égale à 1000 Vickers et une température de fusion au moins égale à 2000°C.

Un tel dispositif peut constituer un rail ou un fil d'alimentation d'un mobile en électricité, ou encore une bague collectrice.

## Description

La présente invention concerne un dispositif d'alimentation en électricité par contact avec un frotteur, le dispositif et le frotteur étant animés d'un mouvement relatif de glissement mutuel au cours duquel le frotteur accomplit une trajectoire déterminée sur le dispositif, le dispositif comportant un corps de montage électriquement conducteur et une pellicule d'usure électriquement conductrice revêtant le corps suivant ladite trajectoire, de façon uniformément solidaire, et présentant une résistance à l'abrasion supérieure à celle du corps.

A titre d'exemples non limitatifs de tels dispositifs, on peut citer les rails destinés à l'alimentation électrique de certains véhicules ferroviaires, certains funiculaires, certains manèges, certaines machines comportant des équipages mobiles en translation ou en rotation, ou encore les caténaires utilisées pour l'alimentation de certains véhicules ferroviaires dont un archet de pantographe joue généralement le rôle de frotteur, à savoir aussi bien les fils souples de caténaire que les caténaires rigides utilisées notamment sous tunnel, ou encore les bagues collectrices utilisées pour assurer un transfert d'électricité entre une partie fixe d'une machine telle qu'un manège ou un carrousel et une partie de cette machine montée à la rotation autour d'un axe déterminé par rapport à la partie fixe.

En matière de rail d'alimentation électrique, US-A-3 836 394 propose de réaliser par métallisation à l'arc ou projection plasma une pellicule d'acier inoxydable, destinée à servir au contact avec les frotteurs, sur un corps quant à lui réalisé sous forme d'un profilé d'aluminium extrudé. Ce corps, destiné au montage du rail d'alimentation sur des supports tels que des isolateurs, présente transversalement à une direction longitudinale, commune à la pellicule, une section déterminée d'une part en fonction de la rigidité que l'on désire communiquer au rail d'alimentation et d'autre part en fonction du courant que l'on désire faire transiter par celui-ci ; à cet égard, l'aluminium et ses alliages présentent l'avantage d'une borine conductibilité électrique associée à une bonne conductibilité thermique, permettant de dissiper rapidement les surchauffes localisées dues aux inévitables arcs électriques accidentels entre le frotteur et la pellicule d'acier inoxydable, étant entendu qu'ils peuvent être remplacés à cet égard par d'autres matériaux tels que le cuivre et ses alliages qui, toutefois, présentent l'inconvénient d'une densité plus grande, entrainant une augmentation de poids pour une section transversale déterminée.

La pellicule d'acier inoxydable, plus résistante à l'abrasion que l'aluminium et ses alliages ou que le cuivre et ses alliages, permet de prolonger la durée de vie du rail d'alimentation en limitant son usure due au frottement du frotteur, mais l'acier inoxydable présente l'inconvénient d'être moins bon conducteur de l'électricité et de la chaleur que l'aluminium et ses alliages ou le cuivre et ses alliages et d'être plus dense qu'eux ; de ce fait, on limite l'épaisseur de cette pellicule à la valeur nécessaire pour assurer un temps minimal déterminé de fonctionnement avant usure complète et, à cet égard, US-A-3 836 394 préconise une épaisseur comprise entre 0,3 et 2 mm.

Cette épaisseur, dictée par la volonté d'assurer au rail d'alimentation électrique une durée de vie convenable, présente l'inconvénient d'être trop importante à deux égards, à savoir eu égard au procédé de métallisation à l'arc ou de projection plasma qui devient particulièrement coûteux de mise en oeuvre pour de telles épaisseurs, même si le choix d'un tel procédé se justifie en lui-même par l'efficacité de l'ancrage de la pellicule sur le corps qu'il permet d'obtenir, et eu égard à la forte résistance électrique et à la médiocre conductibilité thermique qui en résulte compte tenu des caractéristiques physiques de l'acier inoxydable, ce qui conduit d'une part à des pertes d'énergie et d'autre part à des échauffements localisés, générateurs d'érosion, sous l'effet des arcs électriques apparaissant entre le frotteur et la pellicule.

Le but de la présente invention est de remédier à ces inconvénients et, à cet effet, il est proposé un dispositif du type indiqué en préambule, en outre caractérisé en ce que la pellicule d'usure comprend un matériau électriquement conducteur présentant une dureté au moins égale à 1000 Vickers et une température de fusion au moins égale à 2000°C.

Cette dureté sensiblement accrue, en comparaison avec celle de l'acier inoxydable, rendant la pellicule plus résistante à l'usure, et cette température de fusion sensiblement plus élevée que celle de l'acier inoxydable, rendant la pellicule beaucoup moins vulnérable à l'arc électrique que ce dernier et évitant notamment les effets d'électro-érosion, permettent d'allonger considérablement la longévité de la pellicule et du dispositif d'alimentation électrique dans son ensemble et, de ce fait, de réduire sensiblement l'épaisseur de la pellicule pour une longévité encore accrue, en comparaison avec un rail d'alimentation en électricité réalisé conformément aux enseignements de US-A-3 836 394.

En effet, on peut dans ces conditions admettre que la pellicule présente une épaisseur comprise entre 50 et 300 µm environ, de préférence entre 100 et 150 µm environ, le choix de la valeur minimale étant essentiellement dicté par la volonté d'éviter une porosité qui autoriserait le passage d'agents extérieurs, générateurs de corrosion notamment par électrolyse, entre la pellicule et le corps, et le choix de la valeur supérieure étant essentiellement dicté par des considérations d'ordre économique, étant entendu que la dureté et la température de fusion préconisées conformément à la présente invention pour la pellicule d'usure permettent d'assurer au dispositif d'alimentation électrique une longévité convenable même pour les plus faibles valeurs de l'épaisseur de cette pellicule d'usure.

La réduction ainsi possible de l'épaisseur de la pellicule d'usure, en comparaison avec la pellicule d'acier inoxydable décrite dans US-A-3 836 394, permet d'une part d'appliquer dans de bonnes conditions, en vue de la réalisation de cette pellicule, les procédés de projection à l'état fondu du type métallisation à l'arc ou projection plasma, ou procédés analogues, et d'autre part, pour une résistivité électrique et une conductibilité thermique données du matériau constitutif de la pellicule d'usure, de bénéficier à la fois d'une résistance électrique de celle-ci aussi faible que possible, réduisant les pertes d'énergie ainsi que les échauffements en résultant, et d'une conduction thermique aussi bonne que possible à travers la pellicule d'usure, entre le frotteur et le corps de montage du dispositif d'alimentation, pour permettre la dissipation rapide des surchauffes localisées résultant des arcs électriques pouvant intervenir entre le frotteur et le pellicule d'usure, ce qui évite les phénomènes d'électro-érosion et augmente par conséquent d'autant plus la longévité de cette pellicule.

La nature de la pellicule d'usure, dans les limites notamment de dureté et de température de fusion caractéristiques de la présente invention, peut varier dans une large mesure, étant entendu que l'on choisira dans chaque cas pour la réalisation de cette pellicule d'usure un matériau présentant d'une part une résistivité aussi faible que possible et une conductibilité thermique aussi forte que possible, et d'autre part une bonne inoxydabilité dans l'ambiance normale d'utilisation du dispositif d'alimentation électrique.

Ainsi, on peut réaliser la pellicule sous une forme homogène, à partir d'un métal ou alliage métallique homogène et par exemple de molybdène ou de tungstène.

On peut également la réaliser sous une forme comprenant des grains d'un matériau présentant ladite dureté et ladite température de fusion, caractéristiques de l'invention, noyés dans une matrice électriquement conductrice de liaison, présentant une dureté et une température de fusion inférieures à celles dudit matériau ; par exemple, le matériau constitutif des grains pourra être choisi dans un groupe comportant les carbures de tungstène, de titane, de chrome, de molybdène et la matrice pourra être réalisée en un matériau choisi dans un groupe comportant le cobalt, le nickel, le chrome, le cuivre, l'aluminium et leurs alliages, ces exemples n'étant en aucune façon limitatifs.

Dans un tel cas, on pourra avantageusement réaliser le dispositif d'alimentation électrique selon l'invention par un procédé caractérisé en ce que l'on applique la pellicule d'usure sur le corps de montage par projection à une température intermédiaire entre les températures de fusion respectives du matériau des grains et de la matrice, étant entendu que l'on pourra utiliser en vue de la projection et de la mise en température convenable un procédé convenablement choisi parmi les procédés connus de projection à l'état fondu, tels que la métallisation à l'arc, la projection plasma ou autres procédés analogues ; une telle projection à une température intermédiaire entre les températures de fusion respective du matériau des grains et de la matrice permet de préserver les caractéristiques des grains en évitant leur échauffement, tout en provoquant la fusion de la matrice, pour assurer ensuite sa liaison efficace avec le corps de montage, ainsi qu'avec les grains pour lier fermement ces derniers au corps de montage.

Ce dernier peut quant à lui être constitué, de façon traditionnelle, en un matériau choisi dans un groupe comportant l'aluminium et ses alliages ainsi que le cuivre et ses alliages.

De préférence, la solidarisation de la pellicule d'usure avec le corps de montage est directe, et par exemple obtenue par projection de la pellicule d'usure, à l'état fondu totalement ou partiellement, directement sur le corps de montage ; toutefois, on peut également admettre une solidarisation indirecte, c'est-à-dire par l'intermédiaire d'une pellicule d'ancrage choisie et appliquée de façon à s'ancrer de façon uniforme sur le corps de montage et à se prêter à un ancrage uniforme de la pellicule d'usure, puis à résister aux conditions notamment thermiques d'utilisation et à présenter une résistance électrique aussi faible que possible et une conductibilité thermique aussi forte que possible. Cette pellicule d'ancrage peut avantageusement être appliquée, comme la pellicule d'usure, par un procédé de projection à l'état fondu.

On remarquera qu'un dispositif selon l'invention peut se présenter sous différentes formes, correspondant à différents modes d'alimentation en électricité par contact avec un frotteur, en apportant les mêmes avantages.

Ainsi, un dispositif selon l'invention peut constituer un rail ou un fil d'alimentation d'un mobile en électricité, auquel cas le corps et le pellicule présentent des formes respectives allongées suivant une même direction longitudinale et des sections transversales respectives sensiblement constantes, respectivement grande et petite relativement, la section du corps de montage étant dictée par la rigidité que l'on désire lui communiquer, d'une part, et par le rôle que l'on désire lui faire jouer dans la dissipation des surchauffes localisées pouvant apparaître du fait d'arcs électriques entre le frotteur et la pellicule d'usure.

Le dispositif selon l'invention peut également constituer une bague collectrice, auquel cas le corps de montage présente un axe et la pellicule une forme de révolution autour de cet axe.

D'autres caractéristiques et avantages du dispositif d'alimentation électrique selon l'invention ainsi que du procédé préconisé conformément à la présente invention pour la réalisation d'un tel dispositif ressortiront de la description ci-dessous, relative à trois exemples non limitatifs de mise en oeuvre, ainsi que des dessins annexés qui font partie intégrante de cette description.
- La figure 1 montre une vue en perspective d'un rail d'alimentation électrique conforme à la présente invention.
- La figure 2 montre une vue en perspective d'un fil de caténaire conforme à la présente invention.
- La figure 3 montre une vue en perspective d'une bague collectrice conforme à la présente invention.
- La figure 4 montre une vue en coupe transversale d'un autre rail d'alimentation électrique conforme à la présente invention.

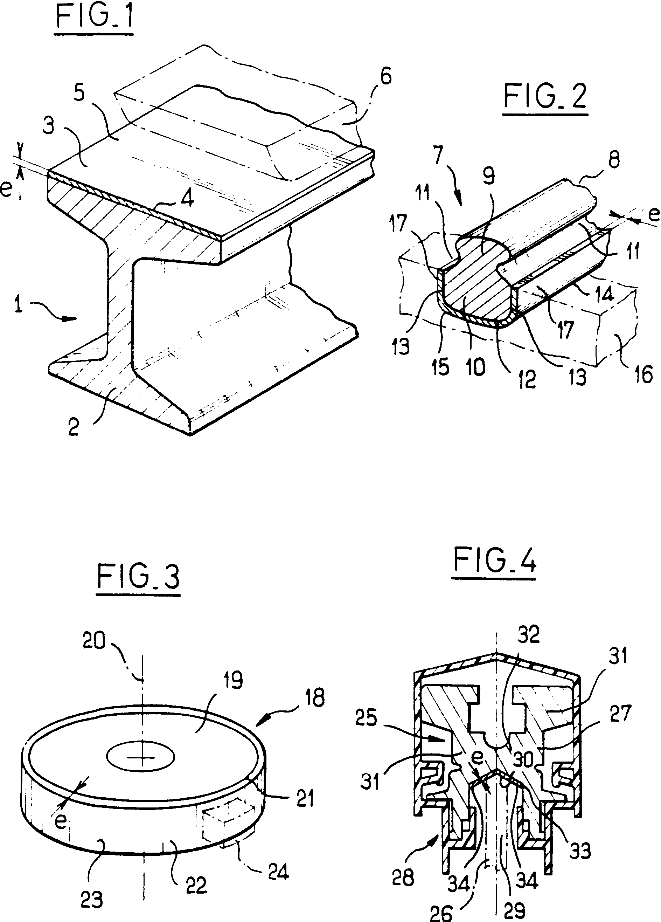

On se réfèrera en premier lieu à la figure 1, où l'on a illustré la réalisation d'un rail longitudinal 1 d'alimentation électrique, comportant deux composants longitudinaux, mutuellement juxtaposés transversalement et solidarisés mutuellement de façon directe et uniforme, c'est-à-dire sans matériau intermédiaire et sans discontinuité entre eux, à raison d'un corps de montage 2 réalisé par exemple sous la forme d'un profilé longitudinal d'aluminium ou d'alliage d'aluminium, ou encore de cuivre ou d'alliage de cuivre, et d'une pellicule continue d'usure 3 avantageusement réalisée par projection à l'état fondu sur une face longitudinale 4 du corps de montage 2, laquelle face 4 présente dans l'exemple illustré une forme plane mais pourrait présenter des formes différentes, convexes ou concaves, dans d'autres modes de mise en oeuvre de l'invention ; le corps de montage 2 et la pellicule d'usure 3 présentent des sections transversales respectives constantes, respectivement en I et en rectangle dans cet exemple non limitatif, la pellicule 3 présentant perpendiculairement à la face 4 une épaisseur uniforme e comprise entre 50 et 300 µm environ, et de préférence entre 100 et 150 µm environ, ces chiffres étant toutefois indiqués à titre d'exemple non limitatif.

Conformément à la présente invention, la pellicule 3 comprend un matériau électriquement conducteur présentant une dureté au moins égale à 1000 Vickers et une température de fusion au moins égale à 2000°C, soit parce qu'elle est intégralement réalisée en un tel matériau, qui peut être un métal tel que du molybdène ou du tungstène ou un alliage, soit parce qu'elle comprend des grains d'un tel matériau, tel qu'un carbure de tungstène, de titane, de chrome, de molybdène noyé dans une matrice électriquement conductrice assurant la liaison des grains entre eux ainsi qu'avec la face 4 du corps 2 et présentant une dureté et une température de fusion inférieures à celles des grains, ce qui permet de réaliser la pellicule d'usure 3 sur la face 4 du corps de montage 2 par projection à une température intermédiaire entre les températures de fusion respectives du matériau des grains et de la matrice ; à cet effet, par exemple, on peut choisir de réaliser la matrice en cobalt, nickel, chrome, cuivre, aluminium ou en des alliages de ces métaux, étant entendu que d'autres choix ne sortiraient pas du cadre de la présente invention, de même que l'on ne sortirait pas de la présente invention en choisissant pour les grains des matériaux autres que les carbures de tungstène, de titane, de chrome.

La pellicule 3 ainsi constituée présente parallèlement à la face 4 du corps de montage 2 une face libre 5 qui présente la même orientation que la face 4 dont elle est espacée de l'épaisseur e de la pellicule 3 et qui est destinée au glissement longitudinal d'un frotteur 6 ; à titre d'exemple non limitatif, lorsque le rail selon l'invention 1 est destiné à alimenter en électricité un véhicule ferroviaire, le frotteur 6 est monté latéralement sur ce véhicule ferroviaire, non représenté, et le rail selon linvention 1 est monté au sol, le long de la voie ferrée, par l'intermédiaire de supports électriquement isolants ; naturellement, cet exemple d'application d'un rail selon l'invention 1 n'est nullement limitatif.

Un Homme du métier comprendra aisément que l'on pourrait réaliser de façon analogue une caténaire rigide.

On se réfèrera à présent à la figure 2, où l'on a illustré un fil longitudinal de caténaire 7 selon l'invention comportant notamment un corps longitudinal de montage 8 qui peut être de même nature que le corps de montage 2 du rail d'alimentation électrique 1. Ce corps de montage 8 présente une section transversale constante propre à permettre son montage, par exemple par pincement, sur des supports non représentés, à savoir dans l'exemple illustré une section transversale comprenant une zone supérieure 9 et une zone inférieure 10, si l'on se réfère à une orientation normale d'utilisation du fil 7, la zone supérieure 9 présentant un contour en queue d'aronde et la zone inférieure 10 un contour approximativement rectangulaire de façon à définir à leur jonction, respectivement de part et d'autre du fil 7, deux gorges longitudinales 11 de réception d'un support assurant la retenue du fil 7 par pincement, de façon non représentée mais aisément concevable par un Homme du métier.

La zone inférieure 10 de la section transversale du corps de montage 8 est ainsi définie par une face longitudinale inférieure 12 convexe et par deux faces longitudinales latérales 13 planes, mutuellement parallèles et opposées de façon à définir avec la face longitudinale inférieure 12, dans la section transversale du corps de montage 8, une forme en U.

Conformément à la présente invention, la face longitudinale inférieure 12 du corps de montage 8 et ses deux faces longitudinales latérales 13 sont revêtues, de façon directement et uniformément solidaire, d'une pellicule continue d'usure 14, en tout point comparable à la pellicule d'usure 3 du rail 1 et présentant notamment comme celle-ci une épaisseur constante e avantageusement comprise entre 50 et 300 µm environ, de préférence entre 100 et 150 µm environ, avec une dureté au moins égale à 1000 Vickers et une température de fusion au moins égale à 2000°C.

La pellicule d'usure 14 présente ainsi, respectivement vers le bas et latéralement, une face inférieure convexe 15 destinée au contact avec l'archet 16 d'un pantographe, non représenté, de locomotive se déplaçant longitudinalement au contact de cette face 15, et deux faces latérales 17 planes, mutuellement parallèles et opposées, auxquelles la face 15 se raccorde latéralement, vers le haut.

Naturellement, cette forme de fil de caténaire 7 ne constitue qu'un exemple non limitatif et l'on ne sortirait pas du cadre de la présente invention en choisissant d'autres formes.

On se réfèrera à présent à la figure 3, où l'on a illustré une bague collectrice 18 comportant un corps de montage 19 présentant au moins localement, et par exemple intégralement, une symétrie de révolution autour d'un axe 20 autour duquel, par exemple, il est monté à la rotation autour d'une pièce fixe non représentée, conjointement avec une pièce mobile également non représentée, afin d'autoriser un transfert d'électricité entre ces deux pièces.

A cet effet, le corps 19, qui peut être réalisé dans l'un quelconque des matériaux indiqués à propos du corps de montage 2 du rail 1, présente, sur une face 21 présentant une forme de révolution autour de l'axe 20 et par exemple cylindrique de révolution autour de cet axe, une pellicule d'usure 22 continue, d'épaisseur uniforme e avantageusement comprise entre 50 et 300 µm environ, et de préférence entre 100 et 150 µm environ, solidarisée directement et uniformément avec la face 21 du corps 19 et présentant les caractéristiques décrites à propos de la pellicule d'usure 3 du rail 1 ; ainsi, la pellicule d'usure 22 présente parallèlement à la face 21 et suivant une orientation identique à celle de celle-ci une face libre 23, également de révolution autour de l'axe 20 et par exemple cylindrique de révolution autour de cet axe 20, en vue du contact avec un frotteur 24 porté, dans cet exemple, par la pièce fixe non représentée.

Comme la pellicule d'usure 3, les pellicules d'usure 14 et 23 sont avantageusement réalisées par projection, à l'état fondu, respectivement sur les faces 12 et 13 du corps de montage 8 et sur la face 21 du corps de montage 19, de façon à assurer une solidarisation directe et uniforme de ces pellicules d'usure 14 et 22 avec le corps de montage respectivement correspondant 8, 19.

On se réfèrera enfin à la figure 4, où l'on a illustré une variante de réalisation de rail d'alimentation électrique selon l'invention, à savoir un rail longitudinal 25 d'alimentation électrique propre à assurer un guidage du frotteur 26 avec lequel il coopère, lequel est par exemple porté par un mobile non représenté tel qu'un véhicule ferroviaire, se déplaçant longitudinalement à côté du rail 25 quant à lui fixe par rapport au sol.

A cet effet, le rail 25 comporte un corps de montage 27 réalisé sous la forme d'un profilé longitudinal de l'un quelconque des matériaux indiqués à propos du corps de montage 2 du rail 1 ; ce corps de montage 27 présente une section transversale constante par exemple en forme de H, définie par deux ailes mutuellement parallèles 31 raccordées mutuellement par une âme 32, de façon à s'intégrer à une enveloppe électriquement isolante 28 dégageant une fente longitudinale 29 d'accès, pour le frotteur 26, à une face longitudinale 30 de l'âme 32 et cette face longitudinale 30 présente une forme en V, concave, dans la section transversale du corps de montage 27.

Conformément à la présente invention, la face 30 est revêtue, de façon directement et uniformément solidaire, d'une pellicule d'usure 33 continue, d'épaisseur uniforme e avantageusement comprise entre 50 et 300 µm environ, et de préférence entre 100 et 150 µm environ, présentant les caractéristiques décrites à propos de la pellicule d'usure 3 du rail 1 ; ainsi, la pellicule d'usure 33 présente au contact du frotteur 26 deux faces longitudinales, planes 34 définissant une section transversale concave, en V, dans laquelle le frotteur 26 vient se caler à l'encontre de déplacements transversaux et qui assure ainsi la longitudinalité de la trajectoire suivie par le frotteur 26 par rapport au rail 25.

La pellicule d'usure 33 est avantageusement réalisée par projection, à l'état fondu.

Un Homme du métier comprendra aisément que les modes de réalisation d'un dispositif selon l'invention qui viennent d'être décrits ne constituent que des exemples non limitatifs, par rapport auxquels on pourra prévoir de nombreuses variantes, notamment de forme sans sortir pour autant du cadre de la présente invention ; en outre, un Homme du métier comprendra aisément que, bien que l'on préfère rendre la pellicule d'usure directement solidaire du corps de montage comme on l'a décrit en référence aux figures 1 à 4, on pourra également prévoir une solidarisation mutuelle indirecte, c'est-à-dire par l'intermédiaire d'une pellicule d'ancrage, électriquement et thermiquement conductrice, naturellement choisie et appliquée, comme la pellicule d'usure, de façon à garantir une iniformité de l'ancrage de la pellicule d'usure sur le corps de montage et à résister aux conditions notamment thermiques d'utilisation ; en particulier, cette pellicule d'ancrage sera de préférence appliquée comme la pellicule d'usure par un procédé de projection à l'état fondu, sur une épaisseur aussi faible que possible.

## Revendications

1. Dispositif d'alimentation en électricité par contact avec un frotteur (6, 16, 24, 26), le dispositif (1, 7, 18, 25) et le frotteur (6, 16, 24, 26) étant animés d'un mouvement relatif de glissement mutuel au cours duquel le frotteur (6, 16, 24, 26) accomplit une trajectoire déterminée sur le dispositif (1, 7, 18, 25), le dispositif (1, 7, 18, 25) comportant un corps de montage (2, 8, 19, 27) électriquement conducteur et une pellicule d'usure (3, 14, 22, 33) électriquement conductrice revêtant le corps (2, 8, 19, 27) suivant ladite trajectoire, de façon uniformément solidaire, et présentant une résistance à l'abrasion supérieure à celle du corps (2, 8, 19, 27),
caractérisé en ce que la pellicule (3, 14, 22, 33) comprend un matériau électriquement conducteur présentant une dureté au moins égale à 1000 Vickers et une température de fusion au moins égale à 2000°C.

2. Dispositif selon la revendication 1, caractérisé en ce que la pellicule (3, 14, 22, 33) présente une épaisseur comprise entre 50 et 300 µm environ, de préférence entre 100 et 150 µm environ.

3. Dispositif selon l'une quelconque des revendications 1 et 2, caractérisé en ce que la pellicule (3, 14, 22, 33) est directement solidaire du corps (2, 8, 19, 27).

4. Dispositif selon l'une quelconque des revendications 1 à 3, caractérisé en ce que la pellicule (3, 14, 22, 33) est une pellicule homogène d'un matériau présentant ladite dureté et ladite température de fusion.

5. Dispositif selon la revendication 4, caractérisé en ce que ledit matériau est choisi dans un groupe comportant le molybdène et le tungstène.

6. Dispositif selon l'une quelconque des revendications 1 à 3, caractérisé en ce que la pellicule (3, 14, 22, 33) comprend des grains d'un matériau présentant ladite dureté et ladite température de fusion, noyés dans une matrice électriquement conductrice de liaison, présentant une dureté et une température de fusion inférieures à celles dudit matériau.

7. Dispositif selon la revendication 6, caractérisé en ce que ledit matériau est choisi dans un groupe comportant les carbures de tungstène, de titane, de chrome, de molybdène.

8. Dispositif selon l'une quelconque des revendications 6 et 7, caractérisé en ce que la matrice est choisie dans un groupe comportant le cobalt, le nickel, le cuivre, l'aluminium et leurs alliages.

9. Dispositif selon l'une quelconque des revendications 1 à 8, caractérisé en ce que le corps (2, 8, 19, 27) est en un matériau choisi dans un groupe comportant l'aluminium et ses alliages, le cuivre et ses alliages.

10. Dispositif selon l'une quelconque des revendications 1 à 9, caractérisé en ce qu'il constitue un rail (1, 25) ou un fil (7) d'alimentation d'un mobile en électricité, et en ce que le corps (2, 8, 27) et la pellicule (3, 14, 33) présentent des formes respectives allongées suivant une même direction longitudinale et des sections transversales respectives sensiblement constantes, respectivement grande et petite relativement.

11. Dispositif selon l'une quelconque des revendications 1 à 9, caractérisé en ce qu'il constitue une bague collectrice (18), en ce que le corps (19) présente un axe (20) et en ce que la pellicule (22) présente une forme de révolution autour de cet axe (20).

12. Procédé de réalisation d'un dispositif selon l'une quelconque des revendications 6 à 8, caractérisé en ce que l'on applique la pellicule d'usure (3, 14, 22, 33) sur le corps de montage (2, 8, 19, 27) par projection à une température intermédiaire entre les températures de fusion respectives du matériau des grains et de la matrice.
